# EUROPEAN PATENT APPLICATION

(11) **EP 1 750 465 A2**
(43) Date of publication of application: **07.02.2007**
(21) Application number: 06016041.3
(22) Date of filing: 01.08.2006
(51) Int. Cl.: H04Q 7/32

(54) **Communication system, method and dual mode terminal having a communication module controlled by a message**

(30) Priority: 02.08.2005 KR 20050070645
(71) Applicant: LG Electronics Inc., Youngdungpo-Gu Seoul (KR)
(72) Inventor: Park, Seong Jin, Manan-gu Anyang-si Gyeonggi-do (KR)
(74) Representative: TER MEER - STEINMEISTER & PARTNER GbR

(57) **Abstract**

A dual mode terminal having a communication module controlled by a message, communication system for communicating with a dual mode terminal, and method for controlling a dual mode terminal are disclosed. In a dual mode terminal capable of communicating with a cellular network and a supplementary service network, and wherein the cellular network communicates with the supplementary service network, the present invention includes a first communication module providing a control signal to activate a second communication module for communicating with the supplementary service network responsive to a first message received from the cellular network. While inactive, the second communications module does not consume power nor interfere with communications of the first communications module.

## Description

This application claims the benefit of the Korean Patent Application No. 10-2005-0070645, filed on August 2, 2005, which is hereby incorporated by reference as if fully set forth herein.

### BACKGROUND OF THE INVENTION

### Field of the Invention

The present invention relates to a dual band dual mode terminal, and more particularly, to a dual mode terminal having a communication module controllable by a message. Although the present invention is suitable for a wide scope of applications, it is particularly suitable for reducing unnecessary power consumption of a dual mode terminal and for minimizing interference between communication modules.

### Discussion of the Related Art

Generally, a dual band dual mode (DBDM, called 'dual mode') terminal means a terminal that supports two communication systems of differing bandwidth. The dual mode terminal consists of a mobile communication modem communicating with a cellular network (principally performing voice communications) and a communication module communicating with a supplementary service network.

A mobile communication network, a cellular network, is primarily dedicated to voice communications using GSM, IS-95 CDMA, IMT-2000, WCDMA, or similar technologies. As mobile communication systems evolve into the newer generations, various services such as large-scale multimedia transfer are enabled and offered in addition to voice communication.

The supplementary service network may be portable Internet (WiBRO, WiMAX), digital broadcasting, wireless LAN (Wi-Fi) or the like. The supplementary service network differs from the cellular network by using different bandwidths. To provide service from the supplementary service network, a terminal requires a separate communication module for communications with the supplementary service network.

Satellite digital multimedia broadcasting (SDMB) has been commercialized in 2005 and terrestrial digital multimedia broadcasting (TDMB) is on the verge of being commercialized as well.

TDMB can transmit various kinds of multimedia information such as digital audio, digital video, and digital data using a personal portable terminal or moving vehicle terminal. SDMB is a service that can transmit the various kinds of multimedia information using a broadcasting satellite or communication satellite.

Various application services are available for digital broadcasting including a TPEG (Transport Protocol Experts Group) service providing real-time traffic information, a GPS service acquiring a position of a vehicle or person by measuring three points using a satellite, an MP3 service providing music by interconnecting an MP3 player to a CD-level audio signal transferred to a portable or vehicle DMB receiver, a slide show service sending a still image of JPEG, an R-commerce service, or a BWS (broadcasting website) service.

A portable Internet service that utilizes 2.3 GHz band is defined as a service enabling a high-speed wireless Internet access at any time or at any place using a portable Internet terminal. The portable Internet services are classified into (a) real-time services like video streaming, audio streaming, and interactive games, (b) non-real-time services allowing a transmission delay like file transmission, multimedia mail, chatting, e-commerce, and (c) best effort services allowing a transmission delay like web-browsing, or e-mail. Moreover, the portable Internet service supports interconnecting with various kinds of conventional wireless data networks (wireless LAN, mobile communication data network).

Standardization of WiMAX (worldwide interoperability for microwave access) (a service developing from a conventional wireless LAN) is in progress. Various communication providers including Intel Corp. participate in WiMAX standardization. WiMAX may use a bandwidth of 2.4 or 2.5 GHz.

In order to provide services from the conventional cellular network and the supplementary service network to a single terminal, a communication module capable of communicating with the cellular network and another communication module capable of communicating with the supplementary service network are simultaneously needed. In particular, using a dual mode terminal, a voice communication is normally conducted via CDMA, GSM and the like. The dual mode terminal can use various supplementary services provided by the supplementary service network such as web surfing, VoD, MoD, VT (video telephony), FTP, broadcasting, or multicasting service.

However, in general the communication module for communicating with the cellular network for the main purpose of voice communications normally needs to be active for receiving incoming calls. If the communication module for communicating with the supplementary service network is active, power is unnecessarily consumed while a supplementary service is not provided.

Moreover, if the supplementary service communication module remains active while a service is not provided, interference with the cellular network communication module may occur to interrupt data transmissions.

### SUMMARY OF THE INVENTION

Accordingly, the present invention is directed to a dual mode terminal having a communication module activated by a message that substantially obviates one or more problems due to limitations and disadvantages of the related art.

An object of the present invention is to provide a dual mode terminal having a communication module controlled by a message in which a supplementary service communication module is active only while a service is being provided and by which unnecessary power consumption can be prevented.

Another object of the present invention is to provide a dual mode terminal having a communication module controlled by a message in which a supplementary service communication module is deactivated while a service is not provided by the supplementary service network thereby eliminating interference with a cellular network communication module.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a dual mode terminal is provided having a communication module controlled by a message and is capable of communications with a cellular network and a supplementary service network. The dual mode terminal includes a first communication module providing a control signal to control communications with the supplementary service network according to a first message received from the cellular network and a second communication module performing communications with the supplementary service network after having been activated according to the control signal.

Preferably, the control signal is either a reset signal (RESET) or a power-on signal (POWER_ON) provided to the second communication module.

Preferably, the first communication module transfers a second message to the cellular network indicating that the second communication module has been activated and communications with the supplementary service network have been established.

Preferably, the first message includes information instructing the dual mode terminal to activate the second communication module for a service previously registered to the supplementary service network.

More preferably, the first message is a message by a short message service (SMS).

Preferably, the supplementary service network is a portable Internet network and the second communication module is capable of communicating with the portable Internet network.

Preferably, the supplementary service network is a digital broadcast network and the second communication module is a digital broadcast modem capable of receiving digital broadcasting from the digital broadcast network.

Preferably, the supplementary service network is a wireless LAN and the second communication module is capable of communicating with the wireless LAN.

In another aspect of the present invention, a communication system for a communication module control of a dual mode terminal by a message includes a supplementary service network transferring a first message. The first message includes information about a service for a specific dual mode terminal. The cellular network transfers a second message information to the dual mode terminal according to the first message received from the supplementary service network. The dual mode terminal performs communications with the supplementary service network for the service according to the second message received from the cellular network.

In another aspect of the present invention of controlling a communication module by a message using a dual mode terminal, a method of controlling a dual mode terminal communication module includes receiving a first message from a cellular network by a first communication module, wherein the first message includes information about a service of a supplementary service network, and communicating with the supplementary service network according to the first message using a second communication module.

Preferably, communicating with the supplementary service includes providing a control signal activating the second communication module from the first communication module according to the first message, and activating the second communication module thereby communicating with the supplementary service network.

More preferably, the control signal is either a reset signal (RESET) or a power-on signal (POWER_ON) for the second communication module.

More preferably, the method further includes providing a second message to the cellular network from the first communication module indicating the second communication module has been activated.

Preferably, the first message is a message by a short message service (SMS).

Preferably, the supplementary service network is a portable Internet network and the second communication module is capable of communicating with the portable Internet network.

Preferably, the supplementary service network is a digital broadcast network and the second communication module is capable of receiving digital broadcasting from the digital broadcast network.

Preferably, the supplementary service network is a wireless LAN and the second communication module is capable of communicating with the wireless LAN.

In another aspect of the present invention, a method is provided for controlling a communication module of a dual mode terminal by a message, the method includes transferring a first message having information about a service for a specific dual mode terminal from a supplementary service network, transferring a second message having information to the dual mode terminal according to the first message from the cellular network, and communicating with the supplementary service network for a service according to the second message received by the dual mode terminal.

Preferably, the method further includes transferring a first response message in response to the second message to the cellular network from the first communication module of the dual mode terminal and transferring a second response message to the supplementary service network notifying that a communication preparation for the service is completed.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a communication system in which a communication module controls a function of a dual mode terminal by a message according to the present invention;

FIG. 2 is a flowchart of information transferred within a communication system according to the present invention;

FIG. 3 is a flowchart of a communication module control method of a dual mode terminal by a message according to the present invention; and

FIG. 4 is a flowchart of a communication module control method of a dual mode terminal by a message according to the present invention.

### DETAILED DESCRIPTION OF THE INVENTION

Reference will now be made in detail to the embodiments of the present invention, examples of which are illustrated in the accompanying drawings. Wherever possible, the same reference numbers will be used throughout the drawings to refer to the same or like parts.

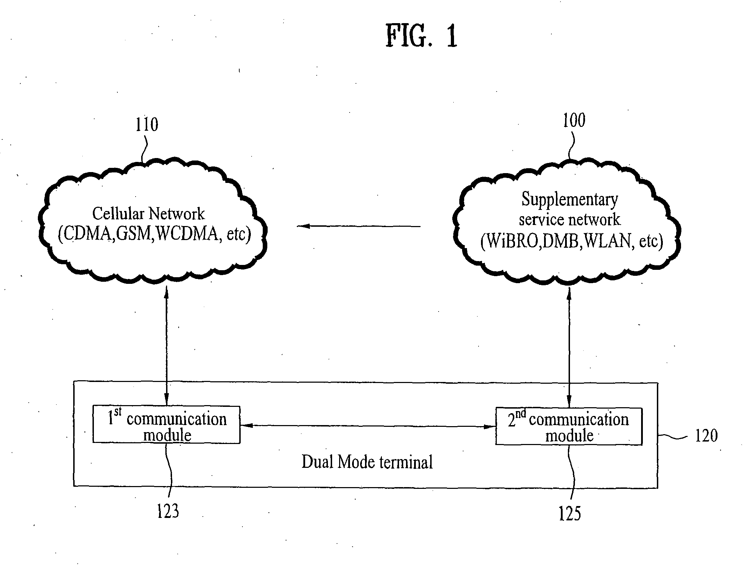

FIG. 1 is a block diagram of a communication system in which a communication module controls a function of a dual mode terminal by a message according to of the present invention.

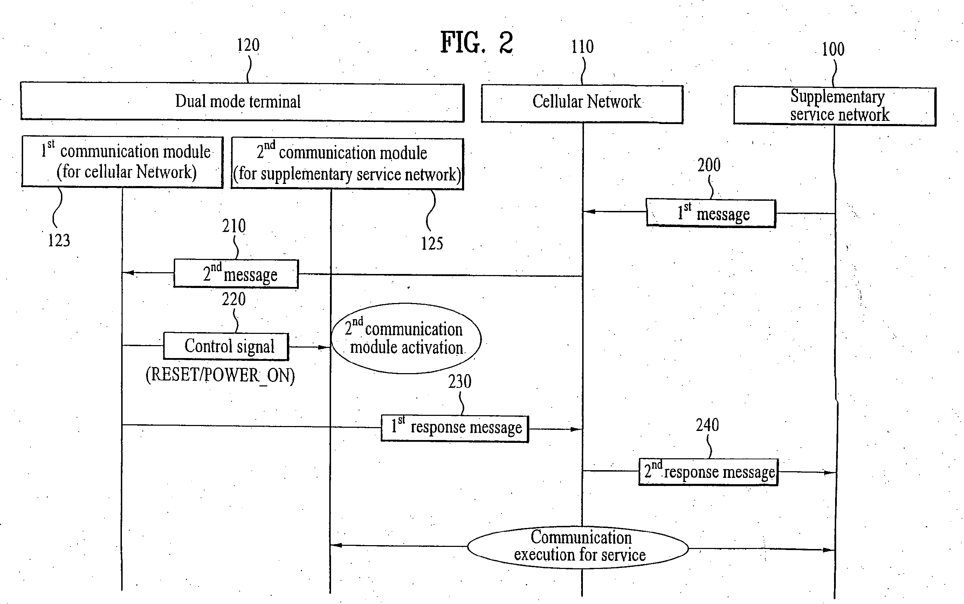

FIG. 2 is a flowchart of information transferred within a communication system according to the present invention.

A communication system having a communication module control function of a dual mode terminal by a message according to the present invention and a dual mode terminal having a communication module control function by a message according to the present invention are explained with reference to FIG. 1 and FIG. 2 as follows.

A communication system according to the present invention includes a supplementary service network 100, a cellular network 110 and a dual mode terminal 120.

The dual mode terminal 120 includes a first communication module 123 for communicating with the cellular network 110 and a second communication module 125 for communicating with the supplementary service network 100.

The cellular network 110 means a mobile communication network having a main purpose of voice communications and may correspond to one of GSM, IS-95 CDMA, IMT-2000 and WCDMA systems. The cellular network 110 has a server for a short message service (SMS) or a multimedia messaging service (MMS) to transmit a message to the dual mode terminal 120.

The supplementary service network 100 communicates with the cellular network 110, and the supplementary service network 100 corresponds to one of a portable Internet network, a digital broadcast network, a wireless LAN and the like. In particular, the portable Internet network or the wireless LAN is a network that can provide various services to a user by communicating with wired Internet (public IP network). In this case, the second communication module 125 of the dual mode terminal 120 is a module capable of communicating with the portable Internet network, receiving digital broadcasting from a digital broadcast network, or communicating with a wireless LAN.

Digital broadcasting may correspond to European DAB (digital audio broadcasting) based on Eureka-147, DVB-T (digital video broadcasting-terrestrial), DVB-H (digital video broadcasting-handheld), Media FLO (forward link only) by Qualcomm Corp, Korean DMB (digital multimedia broadcasting) or the like.

The portable Internet corresponds to WiBRO (wireless broadband Internet) or WiMAX (worldwide interoperability for microwave access) IEEE 802.16e as a representative standard of WiMAX.

Moreover, wireless LAN is a communication system according to IEEE 802.11.

A user of the dual mode terminal 120 can register for a specific service on the supplementary service network 100. To register for a service, the supplementary service network can be accessed using the dual mode terminal 120 or another terminal accessible to the supplementary service network 100. Examples of services that can be registered on the supplementary service network 100 by the user of the dual mode terminal 120 are explained in detail as follows.

If the supplementary service network 100 is a digital broadcast network, the user can register to receive a broadcast in a specific time zone, or a broadcast of a specific program from the digital broadcast network. If the supplementary service network 100 is a portable Internet network or a wireless LAN, advance registrations may be made for various services including streaming service of a specific VoD (video on demand) or MoD (music on demand), a voice or video call via VoIP (voice on Internet protocol) service or VT (video telephony), a broadcast or multicast service provided by the supplementary service network 100,

The advance registrations or reservations are not limited to the above-illustrated examples; other services provided by the supplementary service network 100 can be registered by the user may be included in the examples of the advance registrations.

The supplementary service network 100 transfers a first message 200 having information about service for the dual mode terminal 120 to the cellular network 110. Preferably, the information about the service is information previously registered or registered in the above-explained manner. More preferably, the information about the service can be the information indicating that the second communication module 125 shall be activated for communication of the previously registered service. Moreover, the first message 200 can include identification information that can identify the dual mode terminal 120 or the user of the dual mode terminal 120.

The cellular network 110 transfers a second message 210 having the information about service to the dual mode terminal 120 according to the first message 200 received from the supplementary service network 100. The cellular network 110 transfers the second message 210 to the dual mode terminal 120 using the identification information included in the first message 200. In this case, the detailed features of the information about the service included in the second message 210 are like those explained in the above description. Preferably, the second message 210 can be a SMS or MMS message.

The cellular network 110 converts the first message 200 to the second message 210 to transfer to the dual mode terminal 120. This is because a communication system between the supplementary service network 100 and the cellular network 110 differs from a communication system between the cellular network 110 and the dual mode terminal 120.

The dual mode terminal 120 activates the second communication module 125 to communicate with the supplementary service network 100 for the service according to the second message 210. Preferably, the first communication module 123 parses the received second message to provide a control signal 220 for controlling the communication with the supplementary service network 100 according to a request made by the supplementary service network 100. The second communication module 125 is activated according to the control signal 220 and then communicates with the supplementary service network 100. Preferably, the control signal 220 may be a reset signal (RESET) or power-on signal (POWER_ON) for the second communication module 125.

The dual mode terminal 120 transfers a first response message 230 for the second message 210 to the cellular network 110 via the first communication module 123. The first response message may include a notification that the second communication module is ready to communicate with the supplementary service network 100. The cellular network 110 converts the first response message 230 received from the dual mode terminal 120 to a second response message 240 complying with a communication system between the cellular network 110 and the supplementary service network 100 and then transfers the second response message 240. The supplementary service network 100 having received the second response message 240 from the cellular network 110 communicates with the dual mode terminal 120 via the second communication module 125 for the requested service.

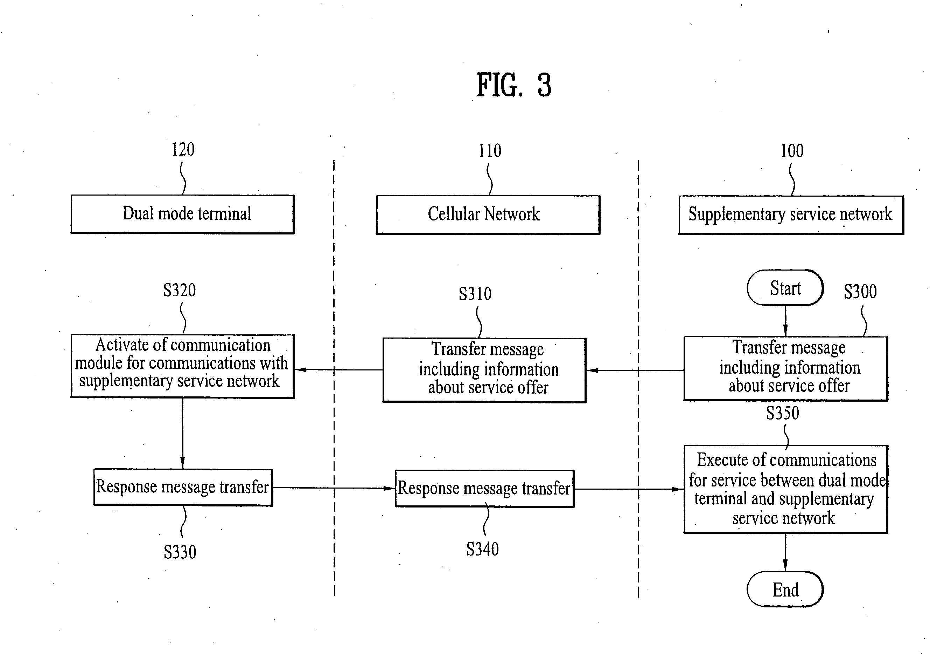

FIG. 3 is a flowchart of a communication module control method for a dual mode terminal by a message according to the present invention showing a communication system.

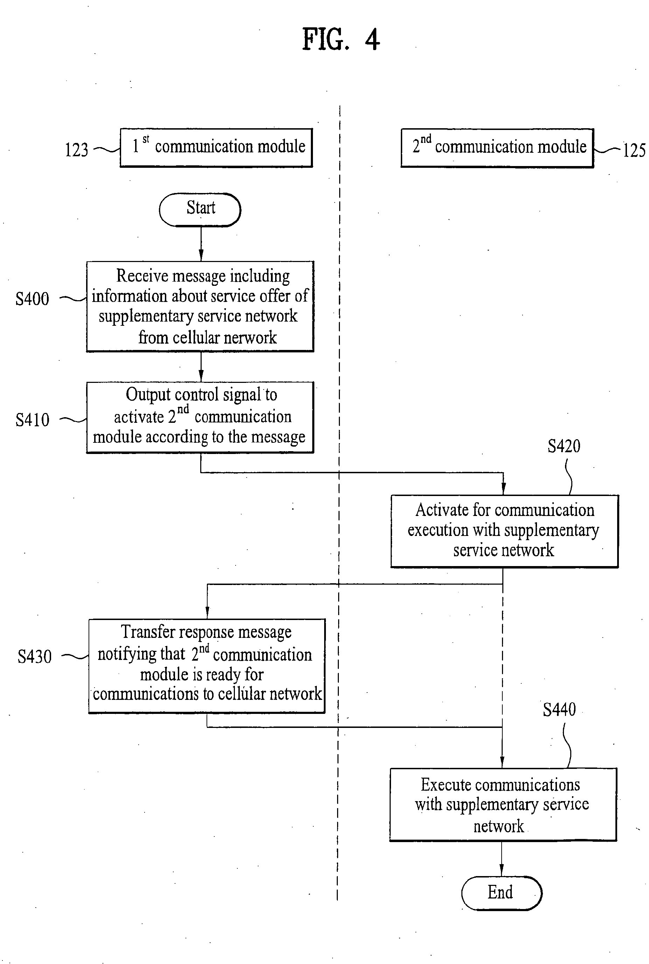

FIG. 4 is a flowchart of a communication module control method of a dual mode terminal by a message according to the present invention showing a dual mode terminal.

A dual mode terminal communication module control method by a message according to the present invention is explained with reference to FIG. 3 and FIG. 4 as follows.

First a supplementary service network 100, communicating with the cellular network 110 transfers a first message having information about service for a specific dual mode terminal 120 to the cellular network 110 (S300). The detailed features of the cellular network 110, the supplementary service network 100, the dual mode terminal 120 and the first message are explained in the foregoing description.

Subsequently, the cellular network 110 transfers a second message including the information about the service offer to the dual mode terminal 120 according to the first message (S310). In this case, the detailed features of the second message are explained in the foregoing description.

The dual mode terminal 120 activates a communication module for communications with the supplementary service network 100 according to the second message (S320, S420) and then communicates with the supplementary service network 100 (S350, S440) for the service. Preferably, a first communication module 123 receives the second message (S400) and provides a control signal for activating a second communication module 125 for communications with the supplementary service network 100 according to a request made by the supplementary service network 100 by parsing the second message (S410).

In doing so, the dual mode terminal 120 transfers a first response message to the cellular network (S330, S430) and the cellular network 110 transfers a second response message to the supplementary service network 100 (S340). The supplementary service network 100 receives the second response message and recognizes that the dual mode terminal 120 is ready to communicate. The supplementary service network 100 then communicates with the dual mode terminal 120 (S350, S440).

Other detailed features for the implementation of the communication module control method of the dual mode terminal by the message according to the present invention are like those explained in the foregoing description.

As is apparent from the above description, a dual mode terminal having a message control a communication module by a message, has the following advantages.

First, a dual mode terminal according to the present invention can prevent unnecessary power consumption because a communication module for communicating with a supplementary service network is activated only while a service is provided by the supplementary service network.

Second, a dual mode terminal according to the present invention can prevent interference between a cellular network communication module and any other supplementary service network communication module, because the supplementary service network communication module is deactivated while a service is not provided by the supplementary service network.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A dual mode terminal comprising:
a first communication module providing a control signal to control communications with a supplementary service network, wherein the first communication module communicates with a cellular network; and
a second communication module receiving the control signal, and after receiving the control signal, communicates with the supplementary service network, wherein the control signal is responsive to a first message received from the cellular network.

2. The terminal of claim 1, wherein the first communication module transmits a second message to the cellular network indicating the second communications module is ready to communicate with the supplementary service network.

3. The terminal of claim 1, wherein the control signal is responsive to a first message received from the cellular network.

4. The terminal of claim 3, wherein the control signal is a reset signal (RESET) to activate the second communications module.

5. The terminal of claim 3, wherein the control signal is a power-on signal (POWER_ON) to activate the second communications module.

6. The terminal of claim 3, wherein the first message includes information for activating the second communication module responsive to a service of the supplementary service network.

7. The terminal of claim 3, wherein the first message is a short message service (SMS) message.

8. The terminal of claim 6, wherein the service of the supplementary service network is one of a portable Internet network, a digital broadcast network, and a wireless network.

9. A communication system for controlling a dual mode terminal communications module by a message, the system comprising:
a supplementary service network communicating with a cellular network, wherein the supplementary service network transfers a first message to the cellular network, and wherein the first message includes information regarding a service of the supplementary service network; and
a dual mode terminal receiving a second message from the cellular network, wherein the second message includes information regarding the service of the supplementary service network.

10. The system of claim 9, wherein the second message is a short message service message (SMS) message.

11. The system of claim 9 wherein the dual mode terminal comprises:
a first communication module receiving the second message and providing a control signal responsive to the second message; and
a second communications module receiving the control signal, and after receiving the control signal, communicates with the supplementary service network.

12. The system of claim 11, wherein the terminal provides a first response to the cellular network when the second communication module is ready to communicate with the supplemental service network.

13. The system of claim 12, wherein the cellular network provides a second response to the supplemental service network in response to the first response.

14. The system of claim 13, wherein the supplemental service network communicates with the second communications module upon receipt of the second response.

15. The system of claim 9, wherein the supplementary service network is one of a portable Internet network, a digital broadcast network, and a wireless LAN.

16. A method of controlling a dual mode terminal having a first and a second communication module, the method comprising:
receiving a first message by the first communication module from a cellular network, wherein the first message contains information about a service of a supplemental service network;
providing a control signal in response to the first message;
activating the second communication module according to the control signal to communicate with the supplemental service network; and
communicating with the service of the supplemental service network responsive to the first message.
